# DEMANDE DE BREVET EUROPEEN

(11) **EP 0 536 030 A1**
(43) Date de publication de la demande: **07.04.1993**
(21) Numéro de dépôt: 92402638.8
(22) Date de dépôt: 25.09.1992
(51) Int. Cl.: A23L 1/212, A23L 1/216, B02C 18/30

(54) **Dispositif hacheur pour la préparation de purées ainsi que procédé de mise en oeuvre et purée ainsi obtenue**

(30) Priorité: 01.10.1991 FR 9112056
(71) Demandeur: SCALIME RECHERCHE ET DEVELOPPEMENT, S.A.R.L., F-50560 GOUVILLE S/ MER (FR)
(72) Inventeur: Ryckeboer, Emile Louis Léopold, Gouville sur Mer (Manche) (FR)
(74) Mandataire: Cabinet HERRBURGER

(57) **Abrégé**

a) Dispositif hacheur pour la préparation de purées ainsi que procédé de mise en oeuvre par l'utilisation de ce dispositif et purée ainsi obtenue.

b) Dispositif caractérisé en ce qu'il se compose d'un carter dans lequel se déplace un arbre longitudinal de commande (17) portant une vis sans fin d'amenée (18) coopérant avec des organes hacheurs (19) constitués par au moins deux grilles perforées (20, 21, 22), notamment en forme de disques, montées libres sur l'arbre de commande (17) et séparées par un couteau à double face (23) entrainé en rotation par cet arbre (17).

## Description

La présente invention concerne un dispositif hacheur pour la préparation de purées, notamment de purées de légumes à l'échelle industrielle.

Au cours de ces dernières décennies, les homes et en particulier les habitants des pays occidentaux ont pris conscience des problèmes liés à l'écologie ; ces préoccupations ont eu pour corollaire un regain accru pour des nourritures à la fois saines et naturelles et en particulier les aliments dits végétariens tels que les légumes, les fruits, ou encore les produits lactés.

Parallèlement à cet essor, les ménagères cherchent à diminuer le temps nécessaire à la préparation des repas et achètent de plus en plus souvent des mets tout préparés.

Les professionnels des industries agroalimentai- res cherchent à suivre cette évolution des goûts et des habitudes du public, et multiplient leurs recherches en vue de proposer à leur clientèle des repas "prêts à consommer" qui peuvent être congelés ou traités, notamment pasteurisés, lyophilisés, ou maintenus sous vide de manière à pouvoir être conservés pendant une durée relativement longue.

Parmi les produits alimentaires ayant actuellement la faveur des consommateurs, on peut mentionner les purées de légumes ou de fruits qui présentent l'avantage d'être agréables au goût, riches en vitamines, et susceptibles de se prêter à de nombreuses préparations, classiques ou sophistiquées.

Les cuisiniers savent tous que la préparation traditionnelle d'une purée, réalisée au moulin à légumes ne constitue pas une opération aussi simple qu'elle pourrait le paraître compte tenu de la nécessité d'obtenir un produit onctueux, exempt de grumeaux, et parallèlement, agréable tant au goût qu'à l'oeil.

Les problèmes susmentionnés s'aggravent dans une large mesure lorsque l'on cherche à passer du stade artisanal à l'échelle industrielle, et parmi toutes les tentatives qui ont été faites jusqu'à présent dans ce sens, aucune n'a permis d'obtenir des produits satisfaisants.

Cette échec est principalement lié au caractère inadapté des dispositifs de hachage utilisés, généralement de type "mixers" qui imposent aux produits notamment aux légumes à traiter des contraintes mécaniques violentes qui entraînent une destruction de leur structure qui est particulièrement fragile et doit donc être ménagée de façon à ne pas obtenir des produits collants dont les qualités organoleptiques ne sont pas aptes à donner satisfaction au consommateur.

Un autre inconvénient des dispositifs de hachage classiques est lié au fait qu'ils introduisent brusquement au sein des produits une importante quantité d'air.

La présente invention a pour objet de remédier à ces inconvénients en proposant un dispositif hacheur pouvant permettre l'obtention à l'échelle industrielle de purées de fruits ou de légumes ayant un goût et une texture largement similaires à ceux des purées traditionnelles réalisées au moulin à légumes.

Ce dispositif hacheur est caractérisé en ce qu'il se compose d'un carter dans lequel se déplace un arbre longitudinal de commande portant une vis sans fin d'amenée coopérant avec des organes hacheurs constitués par au moins deux grilles perforées, notamment en forme de disques, montées libres sur l'arbre de commande, essentiellement perpendiculairement à celui-ci et séparées par un couteau à double face entraîné en rotation par cet arbre.

Un tel dispositif, qui est inspiré des hachoirs à viande classiques, permet, de manière surprenante, la préparation de purées de fruits ou de légumes dont les qualités organo-leptiques correspondent largement à celles que les consommateurs sont en droit d'attendre.

Le nombre et la configuration des organes hacheurs peuvent bien entendu varier en fonction de la nature des produits à traiter et des dimensions de l'installation. On a néanmoins pu obtenir des résultats particulièrement satisfaisants en utilisant des organes hacheurs constitués par une grille de pré-découpage et par deux grilles de hachage se succédant dans le sens de circulation du produit notamment des légumes à hacher, munies de perforations dont les dimensions vont en diminuant dans ce sens et respectivement séparées par un couteau à double face.

A titre d'exemple non limitatif de l'invention, la grille de pré-découpage comporte avantageusement entre deux et six perforations, de préférence trois perforations réparties radialement autour de l'arbre de commande.

Parallèlement, la première grille de hachage peut avantageusement être munie d'orifices essentiellement circulaires ayant un diamètre de l'ordre de 3 mm tandis que la seconde grille de hachage peut être munie d'orifices également essentiellement circulaires mais ayant un diamètre de l'ordre de 2 mm, ces orifices étant uniformément répartis sur la surface des deux grilles de hachage.

La caractéristique essentielle de l'invention est liée à la succession dans le sens d'avancement des produits à traiter de plusieurs grilles munies d'orifices de diamètres décroissants, afin de limiter les contraintes mécaniques subies par le produit, de façon à respecter sa structure, tout en obtenant, à la sortie du dispositif, un produit de texture fine comparable à celle des purées classiques.

Selon une autre caractéristique de l'invention, les couteaux à double face sont respectivement constitués par des éléments essentiellement triangulaires dont chacune des branches est munie d'une lame de découpe susceptible d'attaquer le produit, notamment les légumes à hacher dans le sens de rotation de l'arbre de commande.

Cette configuration a elle aussi été choisie de manière à ménager au maximum les légumes ou fruits à hacher et à les soumettre à des contraintes mécaniques largement similaires à celles qu'ils subissent dans les moulins à légumes manuels de type traditionnel.

L'invention se rapporte également à un procédé de préparation à l'échelle industrielle de purées, notamment de purées de légumes, tels que mis en oeuvre par l'utilisation du dispositif hacheur susmentionné.

De manière classique, conformément à ce procédé, on commence par soumettre les produits, notamment les légumes à traiter, à une étape de préparation au cours de laquelle on les lave, on les pare et on les découpe en cubes ou morceaux ayant des côtés de l'ordre de 5 à 50 mm. Ce traitement préalable est suivi d'une étape de cuisson au cours de laquelle les légumes ou les fruits sont chauffés à la vapeur ou dans un bain d'eau salée à une température environ comprise entre 90 et 120°C pendant une durée de l'ordre de 5 à 60 minutes ; les paramètres de cette phase de cuisson sont choisis de façon à préserver les qualités nutritionnelles et organo-leptiques des produits à traiter, en fonction de la nature de ces produits.

Les produits sortant de cette étape de cuisson sont ensuite soumis à une étape de hachage dans le dispositif hacheur susmentionné, puis à une étape de conditionnement, notamment en barquettes operculées avec réalisation d'un vide partiel, et le cas échéant à une étape de pasteurisation classique.

Outre la configuration particulière du dispositif hacheur, le procédé selon l'invention se distingue du procédé classique par une étape d'adjonction située directement en aval de l'étape de hachage au cours de laquelle les produits, notamment les légumes, sortant du dispositif hacheur sont transférés dans un mélangeur notamment du type à pales où on leur ajoute des ingrédients auxiliaires tels que de la crème, de l'amidon ou des lacto-protéines de façon à reconstituer la texture d'une purée traditionnelle.

Cette opération peut le cas échéant être associée à l'addition au produit, toujours dans le mélangeur, de morceaux de légumes ou de fruits.

Cette opération permet d'obtenir un mélange sans incorporation d'air associé à une bonne liaison du produit grâce à l'action conjuguée des ingrédients ajoutés et de l'amidon propre des légumes.

Le procédé conforme à l'invention se distingue également par une étape de blanchiment des produits à traiter qui précède immédiatement l'étape de cuisson : au cours de cette étape de blanchiment dont l'objet est de permettre de préserver la couleur originelle des légumes, ces derniers sont traités dans un bain d'eau salée dont la température est comprise entre 70 et 110°C et pendant une durée comprise entre 1 et 5 minutes, puis sont refroidis rapidement par aspersion ou par immersion dans une eau dont la température est comprise entre 0 et 20°C.

La température et le temps de blanchirent sont définis pour chaque type de légume ou de fruit.

Les étapes de conditionnement et le cas échéant de pasteurisation sont quant à elles mises en oeuvre de manière classique et ne sont pas particulières au procédé conforme à l'invention.

L'invention se rapporte également à une purée notamment une purée de légumes fabriquée par la mise en oeuvre du procédé susmentionné.

Les caractéristiques du dispositif hacheur ainsi que du procédé conforme à l'invention seront décrites plus en détail en se référant aux dessins annexés dans lesquels :
- la figure 1 est une vue schématique d'une installation de mise en oeuvre du procédé.
- la figure 2 est une vue schématique du dispositif hacheur.
- la figure 3 représente la grille de pré-découpage.
- la figure 4 représente une grille de hachage.
- la figure 5 représente un couteau double face.

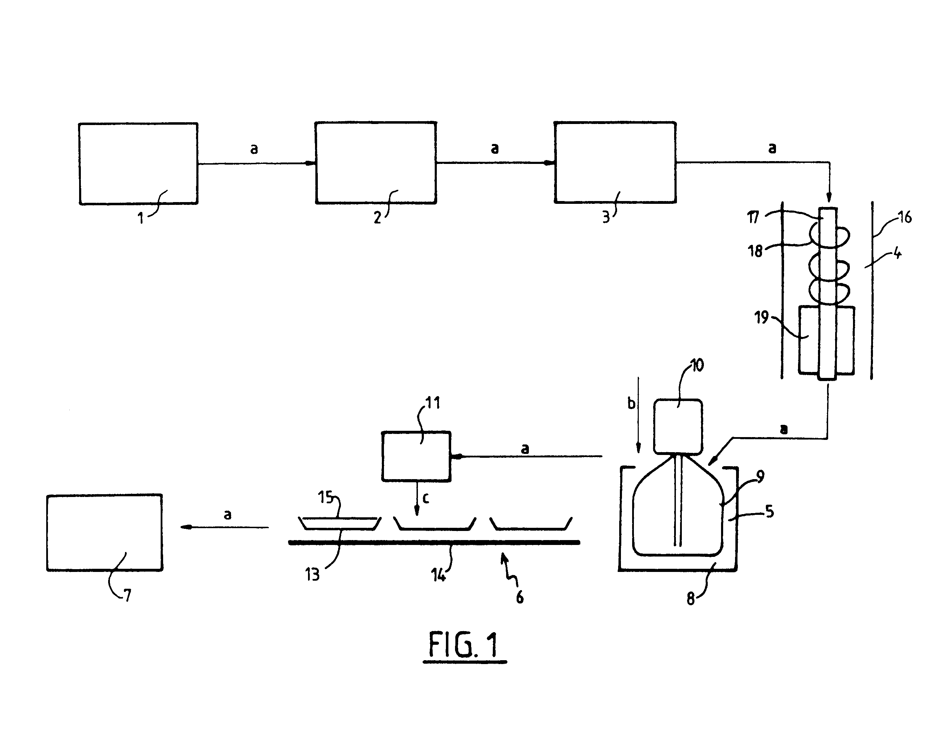

Conformément à la figure 1, lors de la mise en oeuvre du procédé conforme à l'invention les légumes sont successivement transférés selon les flèches a dans un poste de préparation et de découpe préalable 1, dans une poste de blanchiment 2, dans un poste de cuisson 3, dans un poste de hachage 4, dans un poste d'adjonction 5, dans un poste de conditionnement 6 et enfin dans un poste de pasteurisation 7.

Le terme légume utilisé dans la suite de cet exposé doit être entendu dans un sens très large compte tenu du fait que le procédé conforme à l'invention peut s'appliquer à la préparation de purées obtenues à partir d'un ou de plusieurs légumes, ou encore de purées de fruits.

Au niveau du poste 1, les légumes sont lavés, parés et découpés en cubes ou en morceaux ; ils sont ensuite conduits au poste de blanchiment 2 où ils sont traités dans un bain d'eau salée puis refroidis rapidement par aspersion ou par immersion.

Après ce traitement préalable, les légumes sont cuits à la vapeur ou à l'eau dans le poste 3 avant d'être transférés dans le poste de hachage 4 dont les caractéristiques, qui permettent d'obtenir une texture similaire à celle des purées traditionnelles réalisées au moulin à légume, seront décrites plus en détail dans la suite de cet exposé.

A la sortie de ce poste de hachage, les légumes hachés sont conduits au poste d'adjonction 5 qui comporte un mélangeur 8 muni de pales 9 entraînées en rotation par un moteur 10. A ce niveau, on leur ajoute différents ingrédients selon la flèche b, et en particulier de la crème, de l'amidon ou des lacto-protéines de façon à obtenir une bonne liaison du produit, ou encore des morceaux de légumes cuits.

Les légumes hachés ainsi complétés sont ensuite conduits au poste de conditionnement 6 qui comporte une pompe doseuse 11 adaptée à la structure pâteuse du produit et susceptible d'effectuer selon la flèche c le remplissage de barquettes 13 se déplaçant au droit de ce poste sur un tapis 14. Les barquettes remplies sont ensuite munies d'un opercule 15 avec réalisation d'un vide partiel.

Les barquettes sont ensuite transférées dans le poste de pasteurisation 7 où elles sont pasteurisées avec une valeur pasteurisatrice comprise entre 100 et 1000 dans un bain d'immersion ou dans un pasteurisateur à vapeur. Après pasteurisation, les barquettes sont refroidies rapidement de façon à ce que la température à coeur descende au-dessous de 10°C en moins de deux heures. Les barquettes ainsi prêtes à consommer sont ensuite stockées entre 0 et 3°C pendant une durée n'excédant pas 21 jours.

Selon la figure 1, le poste de hachage 4 se compose d'un dispositif hacheur muni d'un carter 16 dans lequel se déplace un arbre longitudinal de commande 17 portant une vis sans fin d'amenée 18 coopérant avec des organes hacheurs 19.

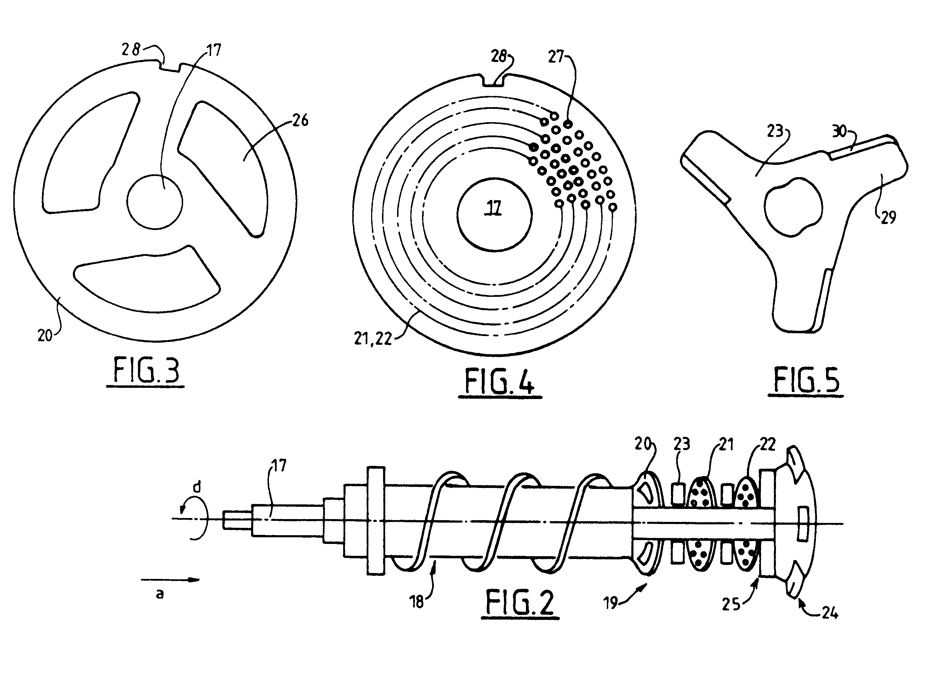

Selon la figure 2, les organes hacheurs 19 sont constitués par trois grilles perforées en forme de disques 20, 21, 22 montées libres sur l'arbre de commande 17 et respectivement séparées par un couteau à double face 23 entraîné en rotation par l'arbre 17. L'ensemble ainsi constitué est maintenu par une bague de serrage 24 qui coopère avec une bague de compensation 25.

Les grilles perforées se décomposent, dans le sens de circulation a des légumes à traiter en une grille de pré-découpage 20 représentée sur la figure 3 et deux grilles de hachage 21,22, représentées sur la figure 4.

Selon la figure 3, la grille de pré-découpage 20 est munie de trois perforations 26 réparties radialement autour de l'arbre de commande 17.

Selon la figure 4, les grilles de hachage 21, 22 sont munies d'orifices 27 essentiellement circulaires, uniformément répartis sur leur surface. Les orifices 27 de la première grille de hachage 21 ont un diamètre de l'ordre de 3 mm tandis que les orifices 27 de la seconde grille de hachage 22 ont un diamètre de l'ordre de 2 mm.

Les grilles perforées 20, 21, 22 sont par ailleurs munies sur leur périphérie externe d'échancrures 28 permettant leur mise en place et leur maintien sur le carter 16, d'une manière non représentée sur les figures.

Selon la figure 5, les couteaux à double face 23 sont constitués par des éléments de forme essentiellement triangulaire comportant trois branches 29 dont chacune est munie d'une lame de découpe 30 susceptible d'attaquer les légumes à hacher dans le sens de rotation d de l'arbre de commande 17.

Les caractéristiques susmentionnées du dispositif hacheur permettent l'obtention de purées ayant une texture similaire à celle des purées traditionnelles réalisées au moulin à légume, et ce tout en préservant les qualités organo-leptiques de celles-ci.

## Revendications

1°) Procédé de préparation de purée, notamment de purée de légumes à l'échelle industrielle, par lequel les produits, notamment les légumes à traiter, sont soumis à une étape de préparation et de découpe préalable, à une étape de cuisson notamment à la vapeur ou dans un bain d'eau, à une étape de hachage, à une étape de conditionnement et, le cas échéant, à une étape de pasteurisation, procédé caractérisé en ce que l'on transfère les produits, notamment les légumes sortant de l'étage de hachage, dans un mélangeur (8), notamment du type à pales (9), où on leur ajoute des ingrédients auxiliaires tels que de la crème, de l'amidon ou des lacto-protéines de façon à reconstituer la texture d'une purée traditionnelle.

2°) Procédé selon la revendication 1, caractérisé en ce que dans le mélangeur (8), on ajoute des morceaux de légumes ou de fruits frais au produit sortant de l'étape de hachage.

3°) Procédé selon l'une quelconque des revendications 1 et 2, caractérisé en ce que, préalablement à l'étape de cuisson (3), on soumet les produits, notamment les légumes à traiter, à une étape de blanchiment (2) dans un bain d'eau salée dont la température est comprise entre 70 et 100°C et pendant une durée comprise entre une et cinq minutes.

4°) Procédé selon la revendication 3, caractérisé en ce qu'après l'étape de blanchiment (2), on refroidit rapidement les produits, notamment les légumes à traiter, par aspersion ou par immersion dans une eau dont la température est comprise entre 0 et 20°C.

5°) Dispositif hacheur pour la préparation de purée, notamment de purée de légumes à l'échelle industrielle, spécialement conçu pour la mise en oeuvre de l'étape de hachage du procédé selon l'une quelconque des revendications 1 à 4, caractérisé en ce qu'il se compose d'un carter (16) dans lequel se déplace un arbre longitudinal de commande (17) portant une vis sans fin d'amenée (18) coopérant avec des organes hacheurs (19) constitués par au moins deux grilles perforées (20, 21, 22), notamment en forme de disques, montées libres sur l'arbre de commande (17) et séparées par un couteau à double face (23) entraîné en rotation par cet arbre (17).

6°) Dispositif selon la revendication 5, caractérisé en ce que les organes hacheurs (19) sont constitués par une grille de pré-découpage (20) et par deux grilles de hachage (21,22) se succédant dans le sens a de circulation du produit, notamment des légumes à hacher, munies de perforations (26, 27) dont les dimensions vont en diminuant dans ce sens et respectivement séparées par un couteau à double face (23).

7°) Dispositif selon la revendication 6, caractérisé en ce que la grille de pré-découpage (20) comporte entre deux et six perforations, de préférence trois perforations (26) réparties radialement autour de l'axe de commande (17).

8°) Dispositif selon l'une quelconque des revendications 6 et 7, caractérisé en ce que la première grille de hachage (21) est munie d'orifices (27) essentiellement circulaires ayant un diamètre de l'ordre de 3 mm tandis que la seconde grille de hachage (22) est munie d'orifices (27) également essentiellement circulaires mais ayant un diamètre de l'ordre de 2 mm, ces orifices (27) étant uniformément répartis sur la surface des deux grilles de hachage (21, 22).

9°) Dispositif selon l'une quelconque des revendications 5 à 8, caractérisé en ce que les couteaux à double face (23) sont respectivement constitués par des éléments essentiellement triangulaires dont chacune des branches (29) est munie d'une lame de découpe (30) susceptible d'attaquer les produits, notamment les légumes à hacher dans le sens de rotation d de l'arbre de commande (17).

10°) Purée, notamment purée de légumes, caractérisée en ce qu'elle est fabriquée par la mise en oeuvre du procédé selon l'une quelconque des revendications 1 à 4.
